# EUROPEAN PATENT APPLICATION

(11) **EP 1 717 712 A1**
(43) Date of publication of application: **02.11.2006**
(21) Application number: 04821097.5
(22) Date of filing: 16.09.2004
(51) Int. Cl.: G06F 15/00

(54) **NETWORK CONNECTION PRESENCE/ABSENCE JUDGMENT METHOD, DATA STRUCTURE FOR JUDGING WHETHER NETWORK CONNECTION IS PRESENT OR ABSENT, AND RECORDING MEDIUM CONTAINING THE DATA STRUCTURE**

(30) Priority: 16.01.2004 JP 2004008964
(71) Applicant: SEIKO EPSON CORPORATION, Shinjuku-ku, Tokyo 163-0811 (JP)
(72) Inventor: KURODA, Naoto, SEIKO EPSON CORPORATION,, Suwa-shi, Nagano 392-8502 (JP)
(74) Representative: Cloughley, Peter Andrew
(86) International application number: PCT/JP2004/013534
(87) International publication number: WO 2005/069153

(57) **Abstract**

It is possible to easily judge whether a computer device is connected to a network. The judging method includes: a step for detecting position information on predetermined data contained in an external device connected to the network and described on a hypertext which has been read from a storage medium, ; a step of displaying a connection presence/absence judgment screen containing a message indicating that the predetermined data is displayed at a predetermined position when the computer device is connected to the network according to the hypertext; and a step of displaying the predetermined data at the predetermined position in the connection presence/absence screen if the predetermined data has been acquired from the external device and displaying predetermined alternative data at the predetermined position in the connection presence/absence judgment screen if the predetermined data has not been acquired from the external device.

## Description

### Technical Field

The present invention relates to a technique for judging whether a computer apparatus is connected to a network.

### Background Art

There is a Web system in which a Web client requests a Web page from a Web server via a network and the Web server provides the Web client with the Web page requested. The Web page is displayed on an output device when a Web browser analyzes an HTML document described in the HTML (HyperText Markup Language). If a link to another HTML document (Web page) is described in the HTML document, it is possible to refer to the Web page laid open to the public on the network. A technique for analyzing the HTML document to display an analysis result is described in Patent Document 1.

Patent Document 1: Japanese Patent Application, Laid Open No. 2002-334013

### Disclosure of the Invention

### Problems that the Invention is to solve

In some cases, an HTML document is stored in a storage medium such as a CD-ROM and a link to a Web page provided by a Web server is described in this HTML document. In cases in which a computer apparatus having read this CD-ROM is a stand-alone computer apparatus not connected to a network, when the computer apparatus requests a Web page provided by the Web server, an error message (e.g., "server cannot be found" or "page cannot be displayed") provided by a Web browser is displayed on an output device.

This error message causes stress for a user unaccustomed to operation of the computer apparatus or a beginner who does not have sufficient knowledge about the computer apparatus. In other words, the user unaccustomed to operation of the computer apparatus or the like cannot understand the meaning of this error message. It is difficult for the user or the like to specify a cause of an error from the error message. For example, it is difficult for the user or the like to decide whether the computer apparatus is connected to the network or what should be done to judge whether the computer apparatus is connected to the network. Therefore, the user cannot solve the error (or connect the computer apparatus to the network) and feels stress.

The invention has been devised in view of these circumstances and it is an object of the invention to let a user of a computer easily decide whether the computer is connected to a network.

### Means for Solving the Problems

In order to solve the problems, in the invention, it is judged whether the computer apparatus is connected to a network, according to whether data included in an external device is displayed on a computer apparatus.

For example, the invention provides a network connection presence/absence judging method of judging whether a computer apparatus is connected to a network, the network connection presence/absence judging method including: a step of detecting positional information of predetermined data included in an external device connected to the network, the positional information being described in hypertext read from a storage medium; a step of displaying, in accordance with the hypertext, a connection presence/absence judgment screen including a message indicating that the predetermined data is displayed in a predetermined position when the computer apparatus is connected to the network; and a step of displaying, when the predetermined data is successfully acquired from the external device, the predetermined data in the predetermined position in the connection presence/absence judgment screen and displaying, when the predetermined data is not successfully acquired from the external device, alternative data decided in advance in the predetermined position in the connection presence/absence judgment screen.

The positional information of the predetermined data included in the external device connected to the network is described in the hypertext stored in the storage medium. The positional information is displayed (or not displayed) on the connection presence/absence screen together with a message explaining the predetermined data. This allows a user of the computer apparatus to recognize at a glance whether the computer apparatus is currently connected to the network. In other words, even a user unaccustomed to operation of the computer or a user having insufficient knowledge about the computer can easily decide whether the computer apparatus is connected to the network.

### Brief Description of the Drawings

Fig. 1 is an overall configuration diagram of a system to which an embodiment of the invention is applied;
Fig. 2 is a diagram showing an example of a hardware configuration of a computer apparatus and a Web server;
Fig. 3 is a diagram showing an example of an output screen displayed on an output device;
Fig. 4 is a diagram showing an example of an external image portion shown in Fig. 3;
Fig. 5 is a diagram showing an example of an HTML document on the output screen shown in Fig. 3;
Fig. 6 is a process flow diagram of the computer apparatus;
Fig. 7 is an overall configuration diagram of a system including a file server and a second storage medium;
Fig. 8 is an overall configuration diagram of a system in which a computer apparatus has various data; and
Fig. 9 is a diagram showing an example of the output screen displayed on the output device.

### Description of Reference Numerals and Symbols

1: Storage medium, 11: HTML document, 12: Internal image file, 13: Work data, 2: Computer apparatus, 21: Data reading unit, 22: Display unit, 23: Instruction receiving unit, 24: Communication processing unit, 3: Web server, 31: Information providing unit, 32: Storing unit, 321: External image file, 322: Link destination HTML, 33: Communication processing unit, 4: Network

### Best Mode for Carrying Out the Invention

Embodiments of the invention will be hereinafter explained.

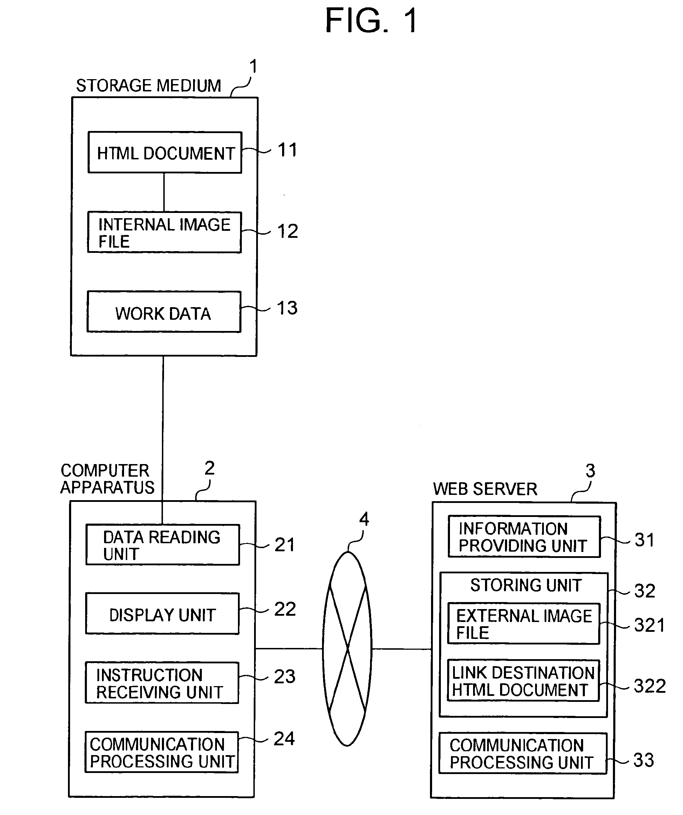

Fig. 1 is an overall configuration diagram of a system to which an embodiment of the invention is applied. As shown in the figure, the system in this embodiment includes a storage medium 1 in which an HTML document 11 is stored, a computer apparatus 2 that displays the HTML document 11 stored in the storage medium 1, and a Web server 3 that provides an image file described in the HTML document 11 stored in the storage medium 11 and a Web page of a link destination. The computer apparatus 2 and the Web server 3 are connected by a network 4 such as the Internet.

The storage medium 1 is a storage device (a storage medium) for storing data, detachable and attachable to the computer apparatus 2. When the storage medium 1 is inserted into the computer apparatus 2, information stored in the storage medium 1 is read into the computer apparatus 2. Specific examples of the storage medium 1 include a CD-ROM, an MO, a DVD, a flexible disk, and a USB memory. The HTML document 11, an internal image file 12, and work data 13 are stored in this storage medium 1.

The HTML document 11 is a text file described in HTML. It is possible to designate (embed) positional information (e.g., URL: Uniform Resource Locator) of another HTML document (Web page) in the HTML document 11. This makes it possible to refer to an HTML document laid open to the public on the network. It is also possible to designate (embed) positional information (e.g., a URL) of an image file in the HTML document 11. This makes it possible to display (paste) an image of a designated image file in the HTML document 11.

Although HTML is used in this embodiment, the invention is not limited to this. It is also possible to apply the invention to documents described in markup languages such as XML (extensible Markup Language) and SGML (Standard Generalized Markup Language) or other hypertext.

The internal image file 12 is an image file stored in the storage medium 1. Image data is stored in the internal image file 12. When a file name of the internal image file 12 is designated in the HTML document 11, in displaying the HTML document 11, a display unit 22 of the computer apparatus 2 described later fetches and displays the image stored in the internal image file 12. The work data 13 is an application program or data for installing or displaying in the computer apparatus 2, for example, a printer driver (software for driving a printer), a manual, or an electronic dictionary.

The computer apparatus 2 is a general-purpose computer that is used as a Web client when connected to the network 4 and used as a stand alone computer when not connected to the network 4. The computer apparatus 2 includes a data reading unit 21 that reads information stored in the storage medium 1, a display unit 22 that analyzes the HTML document 11 and displays the HTML document 11 on the output device, an instruction receiving unit 23 that receives an instruction from a user who operates the computer apparatus 2, and a communication processing unit 24 that transmits and receives data to and from other apparatuses.

The display unit 22 has the same function as a general Web browser. The display unit 22 analyzes the HTML document 11 stored in the storage medium 1 and displays a Web page, which is a result of the analysis, on the output device. When a link of another HTML document described in the HTML document 11 is clicked, the display unit 22 requests another HTML document (Web page) with positional information (a URL) of the link destination, as a destination. When an image file name is designated in the HTML document 11, the display unit 22 requests the image file, pastes an image stored in the image file to a Web page, and displays the image on the output device.
The Web server 3 is an apparatus that receives a request from the computer apparatus 2, which is a Web client, via the network 4 and transmits an HTML document or an image file requested to the computer apparatus 2 that requests the HTML document or the image file. The Web server 3 includes an information providing unit 31 that provides the computer apparatus 2 with various kinds of information such as an HTML document or an image file, a storing unit 32 that stores the various kinds of information, and a communication processing unit 33 that transmits and receives data to and from other apparatuses via the network 4.

An external image file 321 and a link destination HTML document 322 are stored in the storing unit 32. The external image file 321 is an image file stored in the Web server 3, in which image data is stored. When a file name of the external image file 321 is designated in the HTML document 11 of the storage medium 1, the display unit 22 of the computer apparatus 2 acquires the external image file 321 in displaying the HTML document 11 and displays an image stored in the external image file 321 on the output device.

The link destination HTML document 322 is another HTML document designated (embedded) in the HTML document 11 of the storage medium 1. When the instruction receiving unit 23 of the computer apparatus 2 receives an action such as a click on a link portion, the display unit 22 requests the link destination HTML document 322 from the Web server 3 and displays a Web page of the link destination HTML document 322 on the output device.

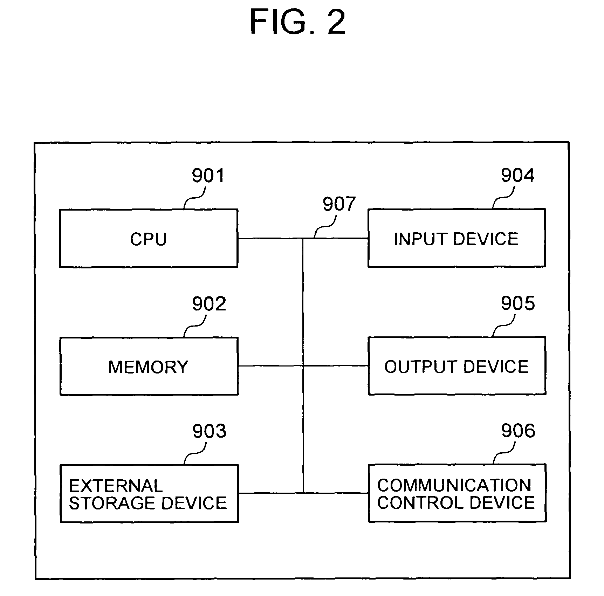

For the computer apparatus 2 and the Web server 3 explained above, it is possible to use, for example, a general-purpose computer system including a CPU 901, a memory 902, an external storage device 903 such as an HDD, an input device 904 such as a keyboard and a mouse, an output device 905 such as a display and a printer, a communication control device 906 for performing network connecting, and a bus 907 that connects these devices, each of which is shown in Fig. 2. The computer apparatus 2 further includes a drive, that is not shown, (a device for reading from and writing to the storage medium 1) of the storage medium 1.

In this computer system, respective functions of the respective devices are realized when the CPU 901 executes predeterminedprograms loaded in the memory 902. For example, respective functions of the computer apparatus 2 and the Web server 3 are realized when the CPU 901 of the computer apparatus 2 executes a program for the computer apparatus 2 and when the CPU 901 of the Web server 3 executes a program for the Web server 3, respectively. The storage medium 1 is used as the external storage device 903 for the computer apparatus 2. A drive, which is not shown, is used as the data reading unit 21 of the computer apparatus 2. The memory 902 or the external storage device 903 is used as the storing unit 32 of the Web server 3.

A Web page (a display screen) displayed on the output device 905 of the computer apparatus 2 is explained.

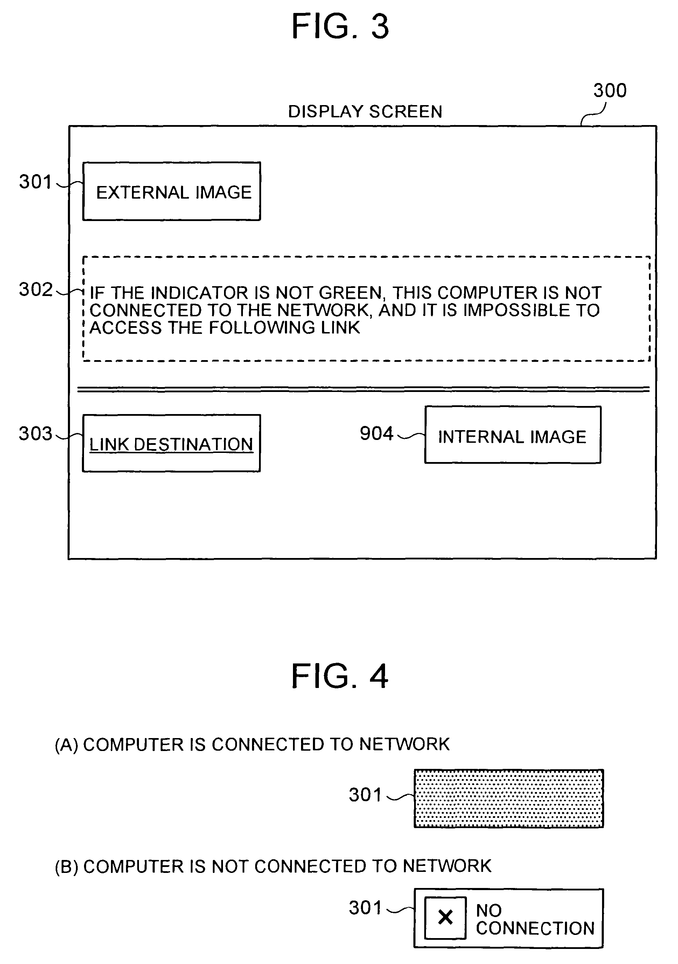

Fig. 3 is a diagram showing an example of a Web page (a display screen) 300 that the display unit 22 of the computer apparatus 2 displays on the output device 905 by analyzing the HTML document 11 stored in the storage medium 1. The Web page 300 includes an external image portion 301, a text portion 302, a link portion 303, and an internal image portion 304.

The external image portion 301 is a portion in which an image stored in the external image file 321 of the storing unit 32 of the Web server 3 is displayed. This external image portion 301 plays a role as an indicator for letting a user of the computer apparatus 2 decide whether the computer apparatus 2 is connected to the network 4.

In analyzing the HTML document 11, for example, when the display unit 22 of the computer apparatus 2 detects an image tag of a form of <IMG SRC="image file name (URL)">, the display unit 22 requests a designated image file from a designated URL. When the external image file 321 is designated as an image tag, the display unit 22 requests the external image file 321 from the Web server 3 connected by the network 4 using the communication processing unit 24. When the computer apparatus 2 is connected to the network 4, the display unit 22 acquires (downloads) the external image file 321 using the communication processing unit 321 and displays an image stored in the external image file 321 in the external image portion 301.

On the other hand, when the computer apparatus 2 is not connected to the network 4, the display unit 22 cannot acquire the external image file 321. In this case, the display unit 22 displays, on the external image portion 301, a predetermined symbol or graphic (e.g., "X") indicating that an image file was not successfully acquired. The symbol or graphic indicating that an image file was not successfully acquired is different depending on Web browser type.

The user of the computer apparatus 2 can easily judge whether the computer apparatus 2 is currently connected to the network, by referring to the image displayed in the external image portion 301 and a text portion 302 explanating an external image described later. Since the external image portion 301 and the text portion 302 are displayed on the same Web page 300 as the link portion 303 (the same screen), the user can accurately recognize whether the computer apparatus 2 is currently connected to the network 4 and judge whether the link portion 303 should be clicked. That is, the user can understand that he or she can refer to a Web page at a link destination when the link portion 303 is clicked in a state connected to the network 4, but cannot refer to the Web page at the link destination if the link portion 303 is clicked in a state not connected to the network.

In cases of a Web page on which only the link portion 303 is displayed, a user unaccustomed to operation of the computer apparatus 2 clicks the link portion 303 while not recognizing whether the computer apparatus 2 is connected to the network 4. When it is not connected to the network 4, an error message is outputted and the user feels stress because he or she cannot understand a cause of the error. However, it is possible to control the output of the error message by displaying the external image portion 301 and the text portion 302 on the same Web page 300 as the link portion 303 (the same screen). The user can easily understand the reason why he or she cannot access the link destination.

An example of an image displayed in the external image portion 301 is shown in Fig. 4. Fig. 4 (A) is an image displayed in the external image portion 301 when the computer apparatus 2 is connected to the network 4. That is, a green rectangular figure is stored in the external image file 321 of the Web server 3 as an external image. Fig. 4 (B) is an alternative image displayed in the external image portion 301 when the computer apparatus 2 is not connected to the network 4. A sign ("x") indicating that an image file was not successfully acquired and an alternative text ("no connection") are displayed. This alternative text consists of characters displayed instead of an image when an image file cannot be acquired. It is possible to describe the alternative text in the HTML document 11 using "alt", which is an attribute of the image tag described above.

In this embodiment, the green rectangular figure is displayed in the external image portion 301 shown in Fig. 4 (A). This is a case in which the external image stored in the external image file 321 is a green rectangular figure. However, the external image stored in the external image file 321 is not limited to this. It is possible to use any image, such as images of various colors and shapes, illustration or photograph images, and the like. Moreover, voice, moving images, text, and the like may be outputted or displayed instead of images.

An explanation for letting the user of the computer apparatus 2 recognize that the external image portion 301 plays a role of an indicator is displayed in the text portion 302. Specifically, an indication that "when the indicator (the external image portion 301) is not green, this computer is not connected to the network" is displayed. The user of the computer apparatus 2 can judge at a glance whether the computer apparatus 2 is connected to the network, by referring to this external image portion 301 and the explanation displayed in the text portion 302. Consequently, even a user unaccustomed to operation of a computer or a user having insufficient knowledge about a computer can easily judge presence or absence of connection to the network.

Moreover, an indication of "when the computer is not connected to the network, it is impossible to access the following link" is displayed in the text portion 302. Therefore, the user of the computer apparatus 2 can easily understand that, since the computer apparatus 2 is not connected to the network when the external image portion 301 serving as the indicator is not green (see Fig. 4(B)), it is impossible to refer to a Web page at a link destination even if the link portion 303 is clicked. Even when the user clicks the link portion 303 and an error message (e.g., "a server cannot be found" or "a page cannot be displayed") provided by the display unit 22 is displayed on the output device 905, since the user recognizes the cause of the error (the computer apparatus 2 is not connected to the network), the user rarely feels stress. A sentence displayed in the text portion 302 is directly described between paragraph tags (<P> </P>) defining a paragraph of the HTML document 11.

Positional information (e.g., a URL) of another HTML document is embedded in the link portion 303. In cases in which the computer apparatus 2 is connected to the network 4, when a "link destination" of the link portion 303 is clicked, the display unit 22 requests the other HTML document on the network with the embedded positional information (the URL) as a destination. When the HTML document requested is found, the display unit 22 downloads the HTML document requested. The display unit 22 displays a Web page of the downloaded HTML document on the output device 905. It is possible to distinguish the link portion 303 from other portions by placing the link portion 303 in between anchor tags (<A> </A>) in the HTML document 11.

The internal image portion 304 is a portion in which an internal image stored in the internal image file 12 of the storage medium 1 is displayed. Therefore, regardless of whether the computer apparatus 2 is connected to the network, the internal image portion 304 is displayed on the Web page 300. Like the external image portion 301, the internal image portion 304 designates a file name (a URL) of the internal image file 12 in an image tag.

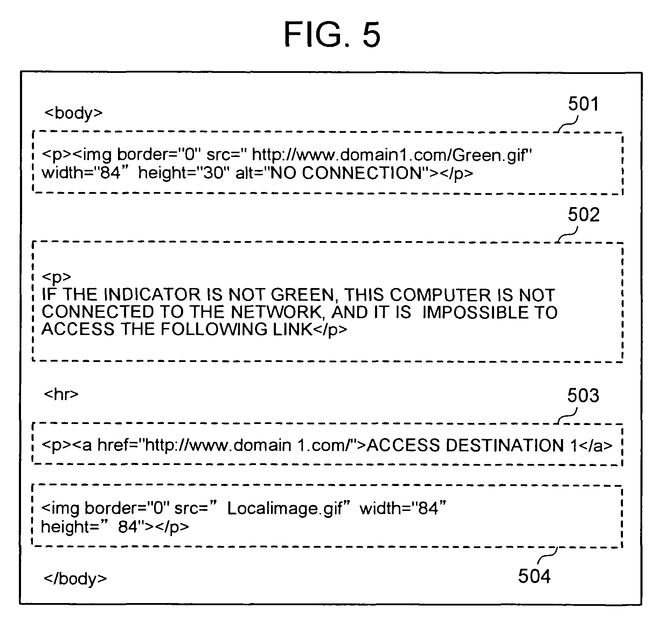

Fig. 5 is a diagram showing an example of an HTML document (a BODY portion) of the Web page 300 (see Fig. 3) explained above. As shown in the figure, the HTML document includes an image tag 501 in which the external image portion 301 is described, a paragraph tag 502 in which a text portion 302 is described, an anchor tag 503 in which the link portion 303 is described, and an image tag 504 in which the internal image portion 304 is described. The display unit 22 analyzes this HTML document and displays a result of the analysis on the output device 905.

Process flow for the computer apparatus 2 will be explained next.

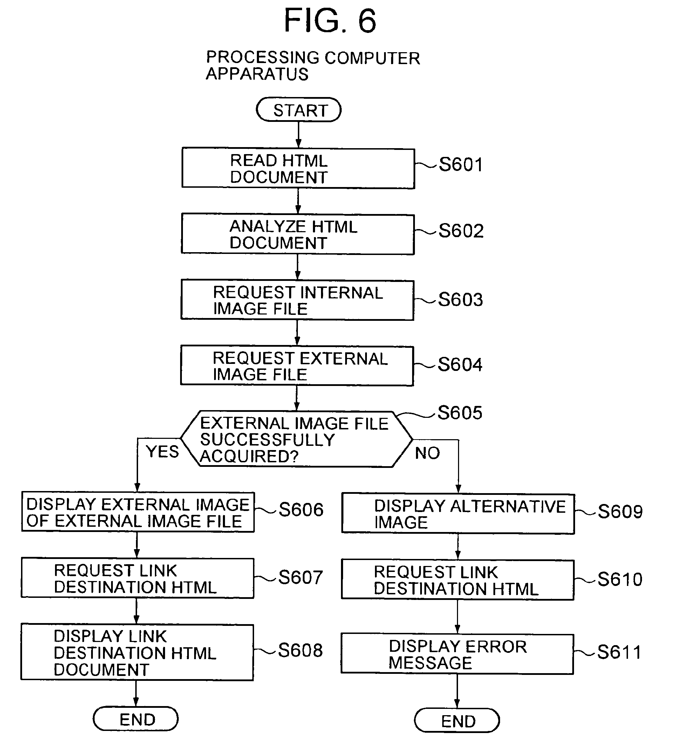

Fig. 6 is the process flow when the computer apparatus 2 displays the HTML document 11 stored in the storage medium 1. First, when the storage medium 1 is inserted into the drive of the computer apparatus 2, the data reading unit 21 reads out the HTML document 11 stored in the storage medium 1 (S601). The display unit 22 analyzes the HTML document 11 read by the data reading unit 21 (S602). That is, like a general Web browser, the display unit 22 analyzes a tag described in the HTML document 11 and detects the internal image file 12 and the external image file 321 designated by an image tag (<IMG SRC=" ">) .

The display unit 22 requests the internal image file 12 that has been detected (S603). That is, the display unit 22 reads the internal image file 12 from the storage medium 1 and pastes an internal image stored in the internal image file 12 at a predetermined location (Fig. 3: the internal image portion 304) described in the HTML document 11. Next, the display unit 22 requests the external image file 321 that has been detected (S604). That is, the display unit 22 requests the external image file 321 from the Web server 3 with a URL designated by the image tag as a destination, using the communication processing unit 24. When the computer apparatus 2 is connected to the network, it is possible to acquire (download) the external image file 321. When the computer apparatus 2 is not connected to the network, it is impossible to acquire (download) the external image file 321. The information providing unit 31 of the Web server 3 provides the computer apparatus 2 with the external image file 321 using the communication processing unit 33.

When the external image file 321 is successfully acquired (S605: YES), the display unit 22 displays, on the output device 905, the Web page 300 (see Fig. 3), to which the external image (see Fig. 4(A)), stored in the acquired external image file 321 (S606). When the instruction receiving unit 23 receives a click on the link portion 303 of the Web page 300, the display unit 22 requests the link destination HTML document 322 with the positional information (the URL) embedded in the link portion 303 as a destination (S607) . That is, the display unit 22 requests the link destination HTML document 322 stored in the storing unit 32 of the Web server 3 using the communication processing unit 24. The display unit 22 displays, on the output device 905, a Web page of the link destination HTML document 322 acquired using the communication processing unit 24 (S608) .

The information providing unit 31 of the Web server 3 provides the computer apparatus 2 with the link destination HTML document 322 using the communication processing unit 33. The work data 13 stored in the storage medium 1 may be installed in the computer apparatus 2 or displayed on the output device 905 in association with the Web page of the link destination HTML document 322.

When the external image file 321 is not successfully acquired (S605: NO), the display unit 22 displays the Web page 300 (see Fig. 3), in which the alternative image (see Fig. 4(B)) is pasted to the external image portion 301, on the output device 905 (S609). The alternative image is, as described above, a symbol or an alternative text that indicates that an image file was not successfully acquired. When the instruction receiving unit 23 receives a click on the link portion 303 of the Web page 300, the display unit 22 requests, as a destination, the link destination HTML document 322 with the positional information (the URL) embedded in the link portion 303 (5610).

However, since the computer apparatus 2 is not connected to the network 4, the display unit 22 displays an error message decided in advance such as "a server cannot be found" or "a page cannot be displayed" (S611) . The user of the computer apparatus 2 recognizes in advance in S609, by referring to the Web page 300 shown in Fig. 3, that the computer apparatus 2 is not connected to the network and that it is impossible to access a link destination. Therefore, when an error message is outputted, the user can eliminate the error by, for example, connecting the computer apparatus 2 to the network 4.

In the abovementioned embodiment, the external image file 321, stored in an external system (the Web server 3) connected via the network 4, is designated in the HTML document 11 stored in the storage medium 1 . The external image stored in this external image file 321 is displayed (or not displayed) on the output device 905 as an indicator. This lets the user of the computer apparatus 2 to recognize at a glance whether the computer apparatus 2 is currently connected to the network. Even a user unaccustomed to operation of a computer or a user not having sufficient knowledge about a computer can easily decide whether the computer apparatus 2 is connected to the network.

The invention is not limited to the embodiment described above. Various modifications of the embodiment are possible within the scope of the invention. For example, in the embodiment, the HTML document 11 is stored in the storage medium 1. However, it is also conceivable that the storage medium 1 is an external device having storing means and connected to the computer apparatus 2 by a network or a cable. When the computer apparatus 2 is in an internal network that cannot be directly connected to the Internet, the computer apparatus 2 may be connected to the network 4 via a proxy server and request the external image file 321 from the Web server 3.

The network 4 explained in the embodiment is not limited to the Internet and may be an intranet. For example, external image files, stored in servers of a business establishment other than an establishment to which the computer apparatus 2 in use belongs, are designated (embedded) in the HTML document 11. Consequently, the user of the computer apparatus 2 can easily decide whether the computer apparatus 2 is connected to the server of the other establishment.

The external image file 321 need not bestored in the Web server 3. The external image file 321 may be stored in, for example, a folder designated in another computer apparatus functioning as a file server. The external image file 321 may be stored in a storage medium not connected via the network.

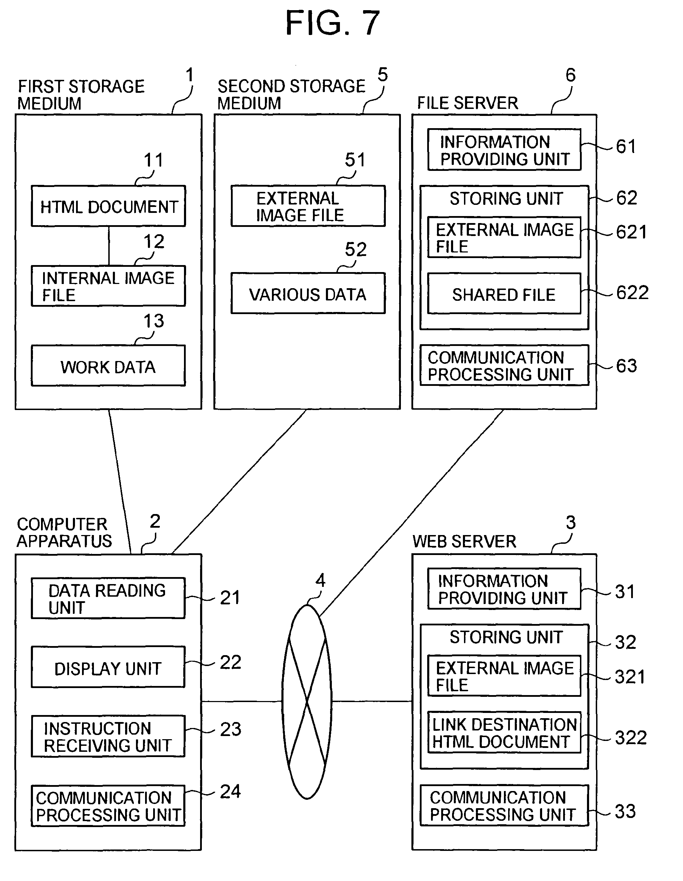

Fig. 7 is a diagram of a system including a file server 6 and a storage medium 5 (hereinafter, "second storage medium") different from the storage medium 1 (hereinafter, "first storage medium"). Fig. 7 is different from the overall diagram of the system shown in Fig. 1 in that the system includes the file server 6 and the second storage medium 5. Otherwise, Fig. 7 is the same as Fig. 1.

The file server 6 includes an information providing unit 61 that provides the computer apparatus 2 with various kinds of information stored in a storing unit 62, the storing unit 62 having stored therein an external image file 621 and a shared file 622, and a communication processing unit 63. As the file server 6, it is possible to use, for example, the general-purpose computer system shown in Fig. 2. In some cases, for example, the computer apparatus 2 allocates logical drives and the like of the file server 6 and performs various kinds of processing. As the logical drives, a shared disk drive such as a hard diskdrive and the like are conceivable. In this case, the external image file 621 stored in the file server 6 as positional information on the shared disk drive is designated in the HTML document 11 of the first storage medium 1. Consequently, the user of the computer apparatus 2 can easily decide whether the shared disk drive of the file server 6 is correctly set in the computer apparatus 2.

Like the first storage medium 1, the second storage medium 5 is a storage device for storing data, that is detachable and attachable to the computer apparatus 2. When the second storage medium 5 is connected to or inserted into the computer apparatus 2 without an intervening network, information stored in the second storage medium 5 is read into the computer apparatus 2. Examples of the second storage medium 5 include a USB memory, a CD-ROM, an MO, a DVD, and a flexible disk. The USB memory is a portable flash memory or the like, that is used by being connectedto a USB connector of the computer apparatus 2. An external image file 51 and various types of data 52 are stored in this second storage medium 5. In this case, positional information of the external image file 51 stored in the second storage medium 5 is designated in the HTML document 11 of the first storage medium 1. Consequently, the user of the computer apparatus 2 can easily decide whether the second storage medium 5 is correctly connected to or inserted in the computer apparatus 2 and functions in an expected configurational state. When the second storage medium 5 is a writable storage medium such as a USB memory, the data reading unit 21 of the computer apparatus 2 can write data to the second storage medium 5.

The display unit 22 of the computer apparatus 2 explained above in the embodiment may analyze an HTML document stored in the memory 902 or an external storage device 903 for the computer apparatus 2 (hereinafter, "memory or the like") and output, to the output device 905, various types of data stored in the memory or the like of the computer apparatus 2. For example, it is conceivable that the display unit 22 is a manual browsing program (software) having a function of browsing (displaying) various electronic manuals and electric dictionaries stored in the memory or the like, a help document browsing program (software) having a function of browsing (displaying) a help document stored in the memory or the like. The help document is a document for explaining a usage method (an operation method), meanings of terms, a response to an message, and the like, for the user who uses the computer apparatus 2.

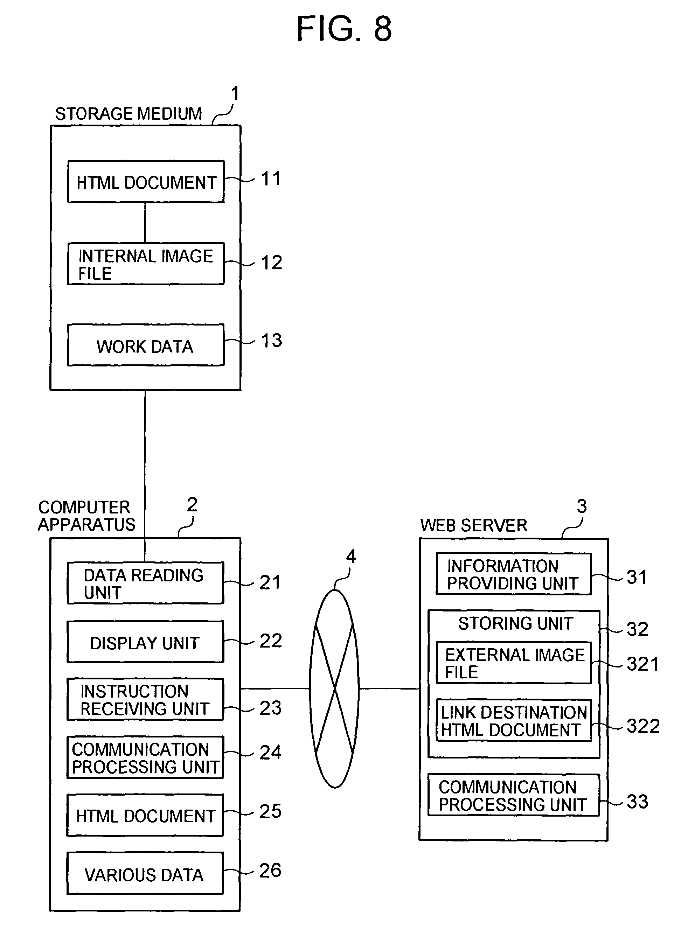

Fig. 8 is an overall configuration diagram of a system in which the display unit 22 is used for browsing various data stored in the computer apparatus 2. Fig. 8 is different from the overall configuration diagram of the system shown in Fig. 1 in that the computer apparatus 2 includes an HTML document 25 and various types of data 26. Otherwise, Fig. 8 is the same as Fig. 1. The HTML document 25 is the same as the HTML document 11 included in the storage medium 1 in Fig. 1. The various types of data 26 consist of various data (including programs) such as an electronic manual, an electronic dictionary, and a help document. The HTML document 25 and the various types of data 26 are stored in the memory or the like. The display unit 22 analyzes the HTML document 25 and displays not only a Web page and an image file laid open to the public on the network but also the various types of data 26 stored in the memory or the like. That is, as in the processing shown in Fig. 6, the display unit 22 analyzes the HTML document 25, reads predetermined information from the various types of data 26, and displays the information on the output device 905.

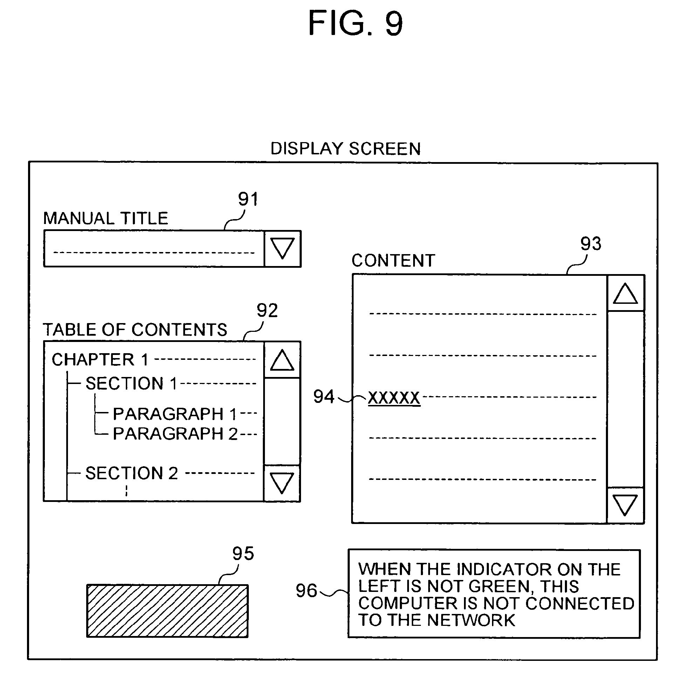

Fig. 9 is a diagram showing an example of a display screen for browsing an electronic manual. As shown in the figure, this display screen includes a title input space 91, a table-of-contents designation space 92, a content display space 93, an external image portion 95, and a text portion 96. The title input space 91 is an area for inputting a title of a manual that is desired to be displayed from among plural manuals included in the various types of data 26. The user selects a title from a drop-down menu (a pull-down menu) in the title input space 91. A table of contents of the manual inputted in the title input space 91 is displayed in the table-of-contents designation space 92. For example, the user moves a cursor to or clicks on an item that is desired to be displayed, from among the table of contents displayed in the table-of-contents designation space 92, to designate a desired item.

Content (a text, an image, etc.) of the manual of the item designated in the table-of-content input space 92 is displayed in the content display space 93. Positional information (a URL) of the link destination HTML document 322 of the Web server 3, that is, link information 94, may be described in the text, the image, and the like displayed in the content display space 93. When the user clicks the link information 94, the display unit 22 requests the link destination HTML document 322 from the Web server 3. The display unit 22 analyzes the link destination HTML document 322. Consequently, a Web page for downloading, for example, a latest printer driver is displayed on the output device 905.

The external image portion 95 and the text portion 96 are the same as the external image 301 and the text portion 302 shown in Fig. 3. The external image portion 95 plays a role of an indicator for letting the user decide whether the computer apparatus 2 is connected to the network 4. An explanation for letting the user recognize that the external image portion 95 plays a role of an indicator is displayed in the text portion 96. Consequently, in clicking the link information 94, the user can easily decide whether the computer apparatus 2 is connected to the network at the present time.

## Claims

1. A network connection presence/absence judging method of judging whether a computer apparatus is connected to a network, the network connection presence/absence judging method comprising:
a step of detecting positional information of predetermined data included in an external device connected to the network, the positional information being described in a hypertext read from a storage medium;
a step of displaying, in accordance with the hypertext, a connection presence/absence judgment screen including a message indicating that the predetermined data is displayed in a predetermined position when the computer apparatus is connected to the network; and
a step of displaying, when the predetermined data is successfully acquired from the external device, the predetermined data in the predetermined position in the connection presence/absence judgment screen, and displaying, when the predetermined data is not successfully acquired from the external device, alternative data decided in advance in the predetermined position in the connection presence/absence judgment screen.

2. A data structure for judging whether a computer apparatus is connected to a network, the data structure comprising:
a message tag that is a tag for describing, when the computer apparatus is connected to the network, a message indicating that predetermined data is displayed in a predetermined position; and
a positional information tag that is a tag for describing positional information of the predetermined data included in an external device connected to the network, and
the data structure causing the computer apparatus to execute:
a step of detecting positional information of the predetermined data on the basis of the positional information tag;
a step of detecting the message based on the message tag and displaying a connection presence/absence judgment screen including the message; and
a step of displaying, when the predetermined data is successfully acquired from the external device on the basis of the positional information, the predetermined data in the predetermined position in the connection presence/absence judgment screen and displaying, when the predetermined data is not successfully acquired from the external device on the basis of the positional information, alternative data decided in advance in the predetermined position in the connection presence/absence judgment screen.

3. A storage medium for storing a data structure for judging whether a computer apparatus is connected to a network,
the data structure comprising:
a message tag for describing, when the computer apparatus is connected to the network, a message indicating that predetermined data is displayed in a predetermined position; and
a positional information tag for describing positional information of the predetermined data included in an external device connected to the network, and
the data structure causing the computer apparatus to execute:
a step of detecting positional information of the predetermined data on the basis of the positional information tag;
a step of detecting the message based on the message tag and displaying a connection presence/absence judgment screen including the message; and
a step of displaying, when the predetermined data is successfully acquired from the external device on the basis of the positional information, the predetermined data in the predetermined position in the connection presence/absence judgment screen and displaying, when the predetermined data is not successfully acquired from the external device on the basis of the positional information, alternative data decided in advance in the predetermined position in the connection presence/absence judgment screen.
